(19) Europäisches Patentamt
European Patent Office
Office européen des brevets

(11) EP 0 704 745 A2

(12) **EUROPEAN PATENT APPLICATION**

(43) Date of publication:
03.04.1996 Bulletin 1996/14

(51) Int. Cl.⁶: **G02F 1/17**

(21) Application number: 95115143.0

(22) Date of filing: 26.09.1995

(84) Designated Contracting States:
DE FR GB IT

(30) Priority: 30.09.1994 JP 238274/94
30.09.1994 JP 238273/94
30.09.1994 JP 238272/94

(71) Applicants:
• FUJIKURA LTD.
Koto-ku Tokyo (JP)
• FUJIKURA KASEI CO., LTD.
Itabashi-Ku Tokyo-To (JP)

(72) Inventors:
• Akashi, Kazuya
Inbagun, Chiba-ken (JP)

• Edamura, Kazuya,
Fujikura Kasei Co., Ltd.
Minato-ku, Tokyo (JP)
• Anzai, Hidenobu
Tokyo (JP)
• Otsubo, Yasufumi
Inage-ku, Chiba-shi, Chiba-ken (JP)

(74) Representative: Grünecker, Kinkeldey,
Stockmair & Schwanhäusser
Anwaltssozietät
Maximilianstrasse 58
D-80538 München (DE)

(54) **Display device and method based on transmitted light intensity control**

(57) A display device for electrically displaying a graphic pattern. The display device is composed of a housing (26) having two surfaces (20) disposed in opposed relation to each other, at least a portion of each of which is transparent, and which are disposed in opposed relation to each other. First and second elongated transparent electrodes (22, 23) are formed on the opposed surfaces (20), respectively, to form a matrix-like configuration. An electro-sensitive type photofunctional fluid composition (21) produced by dispersing electric alignment particles (30) in an electrical insulating medium (29) is packed within the housing (26). The electric alignment particles (30) are responsive to an electric field generated between the first and second transparent electrodes (22, 23) to be aligned to form chain structures so that the electro-sensitive type photofunctional fluid composition (21) becomes transparent. This can control the quantity of light passing through the housing (26) for the graphic pattern display.

FIG. 1A

**Description**

Background of the Invention

[Field of the Invention]

The present invention relates to a display device and method based on transmitted light intensity control implemented by using a fluid composition responsive to an electric field.

[Description of the Prior Art]

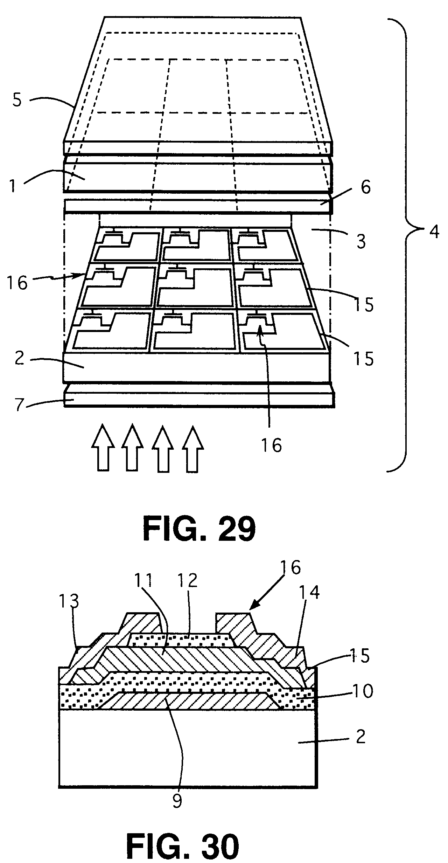

As a conventional display device there is known a liquid crystal display device as shown in Fig. 29, wherein a liquid crystal 3 is enclosed between transparent glass-made substrates 1 and 2 to make up a liquid crystal panel 4. This liquid crystal panel 4 is equipped with a polarizing plate 5 on the upper side glass substrate 1 and provided with a common electrode under the upper side glass substrate 1. In addition, the liquid crystal panel 4 has a polarizing plate 7 under the lower side glass substrate 2. A fine electric circuit for driving the liquid crystal is formed on the liquid crystal side surface of the lower side glass substrate 2. Fig. 30 illustrates an ordinary arrangement of the liquid crystal driving electric circuit, which is made as a drive circuit using thin film transistors. In Fig. 30, a gate electrode 9 is formed on the transparent substrate 2 before being covered with a gate insulating layer 10. On the gate insulating layer 10 there are successively formed an a-Si film 11 and etch stopper layer 12 which are interposed between a source electrode 13 and a drain electrode 14. The drain electrode 14 is connected with a pixel electrode 15. That is, a switching element 16 is constructed with a thin film transistor comprising the gate electrode 9, source electrode 13 and drain electrode 14. This switching element 16 selectively controls the energization to the pixel electrode 15 so that an electric field due to the energization to the pixel electrode 15 causes the orientations of the liquid crystal molecules, thus carrying out the switching control between a display state and a non-display state.

The liquid crystal composition itself is still very costly, in addition there is another problem on a liquid crystal display device. The manufacturing cost is also extremely high, because polarization plates and various filters are required for the device derived on fine electric circuit, in addition to a considerable expensive circuit manufacturing technique. Moreover, such a liquid crystal device is disadvantageous in that the oriented state is immediately broken off in response to the removal of the applied electric field and, hence, it is necessary that a given electric field be always applied to the liquid crystal.

In addition, various meters for use in motor vehicles and electric equipment such as clocks and radios have been developed in order to digitally display speeds, temperatures, time and so on. Some of these meters employ a fluid composition such as a liquid crystal composition and electrochromic composition whose optical characteristics are controllable by means of an electric field. These compositions have an electro-sensitive type photofunctional property. That is, in response to application of an electric field, the liquid crystal composition changes the polarizing property of the transmitted light and the electrochromatic composition absorbs transmitted light with specific wavelengths. However, a meter based on the liquid crystal is costly as well as the liquid crystal display device described above, and a meter based on the electrochromatic composition has a low responsibility and has limits in coloring.

Summary of the Invention

It is therefore an object of the present invention to provide a display device and method which are capable of effectively controlling the transmitted light intensity for displays.

One feature of the present invention is the utilization of an electro-sensitive type photofunctional fluid composition (hereinafter referred to as an EA fluid). This composition is a fluid produced by, for example, dispersing solid particles in an electrical insulating medium, and in response to application of an electric field thereto, the solid particles establish dielectric polarization, and align with with each other and arranged or aligned in the field direction due to the electrostatic attractive force caused by the dielectric polarization, thus producing chain bodies (configurations). In addition, some of solid particles have an electrophoretic property, and in response to application of an electric field thereto, are electrophoretically moved toward electrode sections to be arranged and oriented to take an arranged massive structure. The fact that the arrangement and orientation of particles take place under an electric field is called an electric alignment effect, and the solid particles which take such an electric alignment effect are referred to as electric alignment particles (EA particles). The operational principle of the EA fluid will become apparent as the description proceeds.

According to the present invention, there is provided a display device comprising: a housing having two surfaces, at least a portion of each of which is transparent, and which are disposed in opposed relation to each other; first elongated transparent electrodes formed on one of the opposed surfaces of the housing to be arranged successively along a direction; second elongated transparent electrodes formed on the other surface of the housing to be arranged successively along a direction perpendicular to the arranged direction of the first elongated transparent electrodes so that the first and second elongated transparent electrodes form a matrix-like configuration; and an electro-sensitive type photofunctional fluid composition produced by dispersing electric alignment particles in an electrical insulating medium and packed within the housing. Additionally provided is electric field applying means whereby an electric field is successively applied to between the first and second transparent electrodes at given time intervals so that the electric alignment particles are partially aligned in response to the applied electric field.

Furthermore, according to the present invention, there is provided a display method of displaying a graphic pattern on a display device, the display device comprising a housing having two surfaces, at least a portion of each of which is transparent, and which are disposed in opposed relation to each other, sets of first and second transparent electrodes formed on the opposed surfaces of the housing, respectively, to be disposed in opposed relation to each other, and an electro-sensitive type photofunctional fluid composition produced by dispersing electric alignment particles in an electrical insulating medium and packed within the housing, the method comprising the step of successively applying a voltage to the sets of the first and second transparent electrodes at time intervals so that an electric field is successively applied to between the first and second transparent electrodes, the electric alignment particles being partially aligned in response to the applied electric field to allow a quantity of transmitted light passing through the housing to be controlled.

Moreover, according to the present invention, there is provided a display device comprising: a housing having two surfaces, at least a portion of each of which is transparent, and which are disposed in opposed relation to each other; transparent conductive layers formed on the transparent portions of the opposed surfaces, respectively, each of the transparent conductive layers being divided into a plurality of sections to form a graduation; and an electro-sensitive type photofunctional fluid composition produced by dispersing electric alignment particles in an electrical insulating medium and packed within the housing.

For example, the transparent conductive layer is divided into two strip-like vertical sections and three strip-like horizontal sections on a two-dimensional plane, the three horizontal sections being disposed to extend between the two vertical sections in directions substantially perpendicular to longitudinal directions of the two vertical sections. Or, the divided sections are arranged successively to entirely form a substantial circular configuration.

Still further, according to the present invention, there is provided a display device comprising a plurality of housings arranged successively to form a graduation, the each of the plurality of housings including: two surfaces, at least a portion of each of which is transparent, and which are disposed in opposed relation to each other; transparent conductive layers formed on the transparent portions of the opposed surfaces, respectively; and an electro-sensitive type photofunctional fluid composition produced by dispersing electric alignment particles in an electrical insulating medium and packed within the housing.

Brief Description of the Drawings

The object and features of the present invention will become more readily apparent from the following detailed description of the preferred embodiments taken in conjunction with the accompanying drawings in which:

Fig. 1A is a cross-sectional view showing a graphic display device according to a first embodiment of the present invention;

Fig. 1B is a cross-sectional view showing one EA particle to be used in the present invention;

Fig. 2 is an illustration of a matrix configuration of transparent electrodes in the graphic display device according to the first embodiment;

Fig. 3 is a cross-sectional view showing an alignment state and dispersion state of the EA particles between the transparent electrodes under electric field and zero-field, resp;

Fig. 4 is an explanatory illustration of a character display on the display device according to the first embodiment;

Fig. 5 shows another example of arrangement of the transparent electrodes in the first embodiment;

Fig. 6 illustrates another example of arrangement of the transparent electrodes in the first embodiment;

Fig. 7 is a block diagram showing a drive circuit for the graphic display device according to the first embodiment;

Fig. 8 is an illustration showing a column structure derived from EA particle chains under electric field in the present invention;

Fig. 9 is an illustration for describing an electrically joining state of the EA particles in the present invention;

Fig. 10 is an illustration of one colored EA particle in the present invention;

Fig. 11 is a cross-sectional view showing a display device according to a second embodiment of the present invention;

Fig. 12 is a plan view showing graphic patterns formed with transparent conductive layers in the second embodiment;

Fig. 13 is a plan view showing a tachometer made in accordance with the second embodiment;

Fig. 14A is a plan view showing a digital display device according to the second embodiment;

Fig. 14B is a plan view showing a digital display according to the second embodiment;

Fig. 15 is a cross-sectional view showing a dispersion state of the EA particles between the transparent electrodes under electric field and zero field;

Fig. 16 is a cross-sectional view showing an orientation state of the EA particles between the transparent electrodes under electric field and zero field;

Fig. 17B is a plan view showing a modification of the Fig. 14A display device according to the second embodiment;

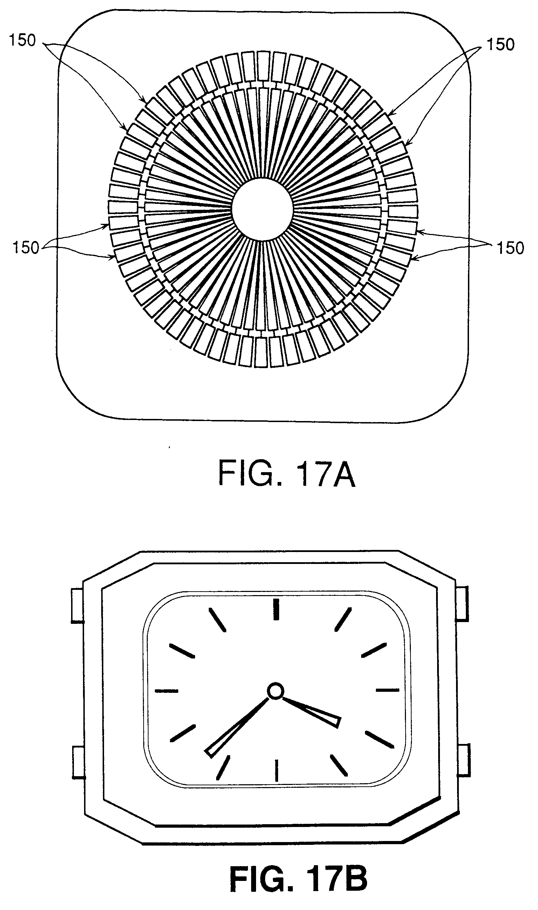

Fig. 17B is a front elevational view showing a clock based on the Fig. 17A display device;

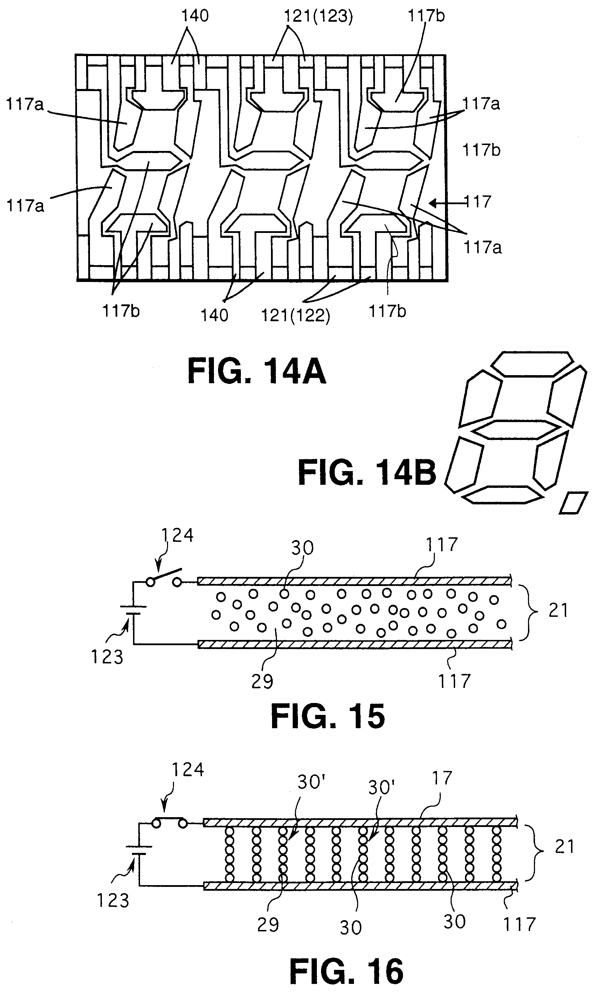

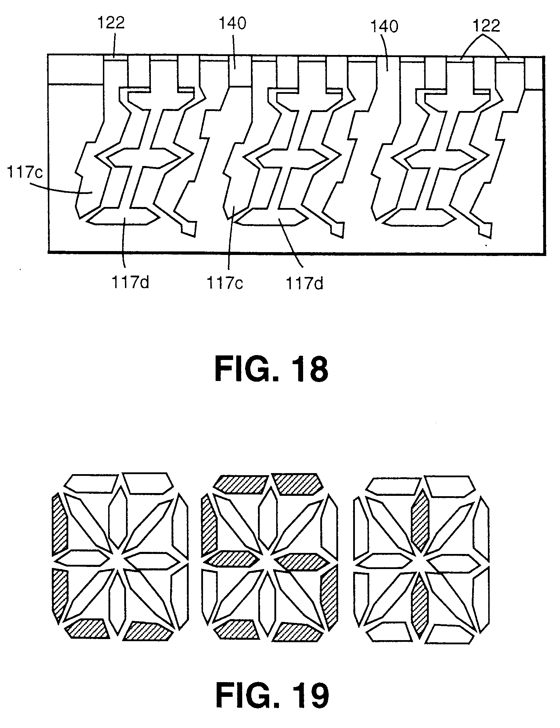

Fig. 18 illustrates a modification of the Fig. 14A display device according to the second embodiment;

Fig. 19 shows another modification of the Fig. 14A display device according to the second embodiment;

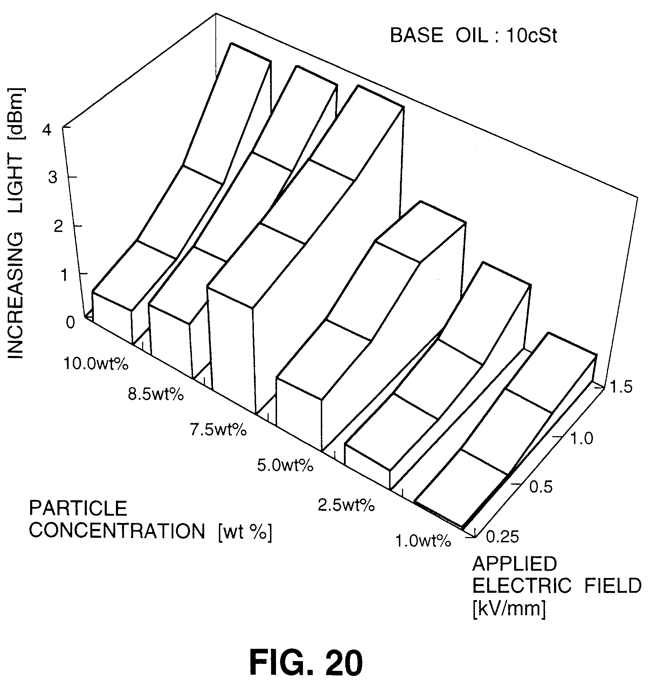

Fig. 20 is a graphic illustration of the transmitted light intensity as a function of the EA particle concentration and the strength of the electric field to be applied for EA fluid dispersed in an insulating medium with a viscosity of 10 cSt;

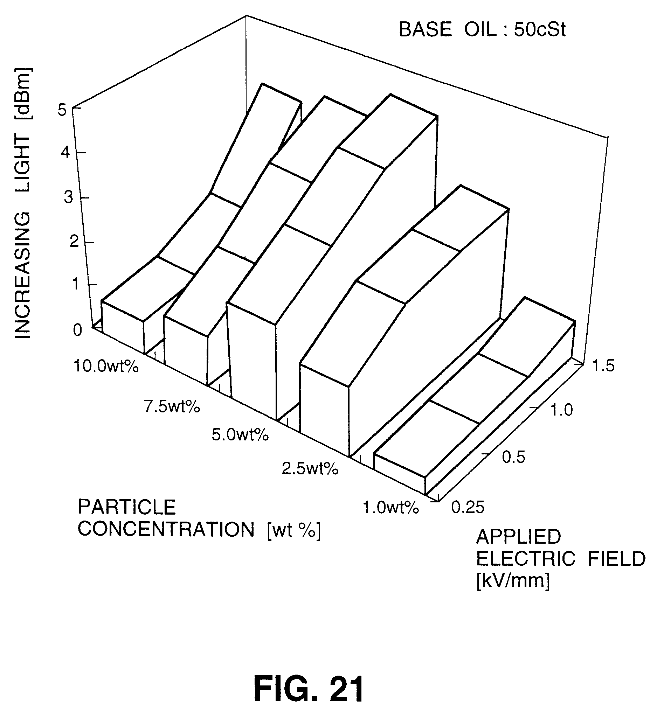

Fig. 21 is a graphic illustration of the transmitted light intensity as a function of the EA particle concentration and the strength of the electric field to be applied for EA fluid dispersed in an insulating medium with a viscosity of 50 cSt;

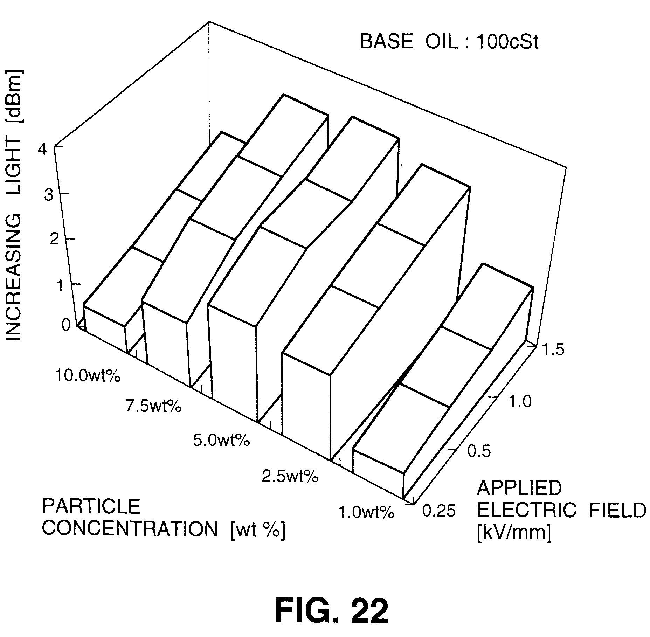

Fig. 22 is a graphic illustration of the transmitted light intensity as a function of the EA particle concentration and the strength of the electric field to be applied for EA fluid dispersed in an insulating medium with a viscosity of 100 cSt;

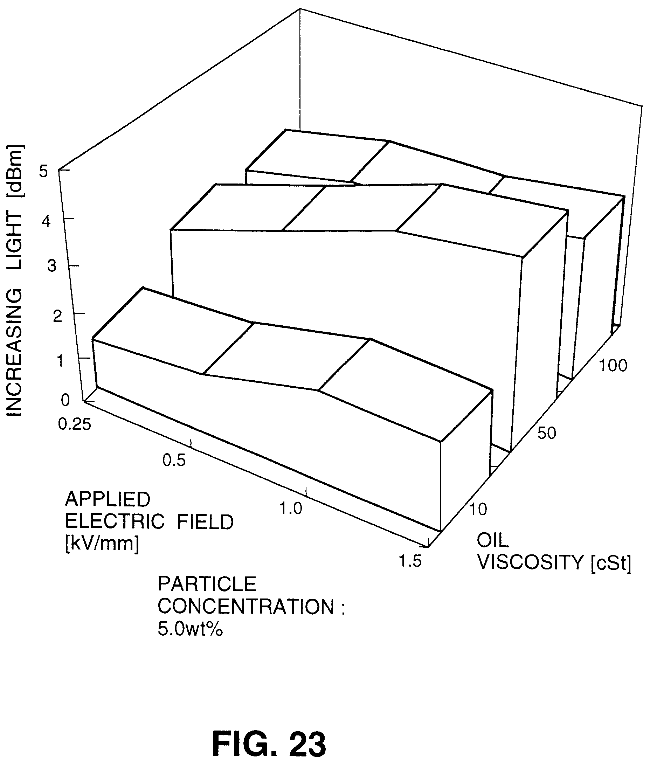

Fig. 23 is a graphic illustration of the transmitted light intensity in an EA fluid in accordance with the parameters of the kinematic viscosity of an electrical insulating medium and the applied voltage in the case that the EA particle concentration is 5.0% by weight;

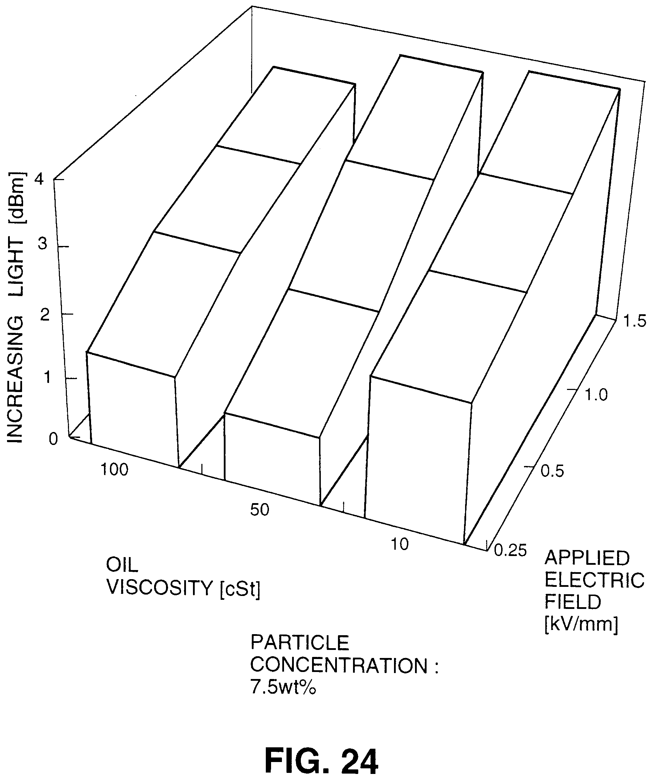

Fig. 24 is a graphic illustration of the transmitted light intensity in an EA fluid in accordance with the parameters of the kinematic viscosity of an electrical insulating medium and the applied voltage in the case that the EA particle concentration is 7.5% by weight;

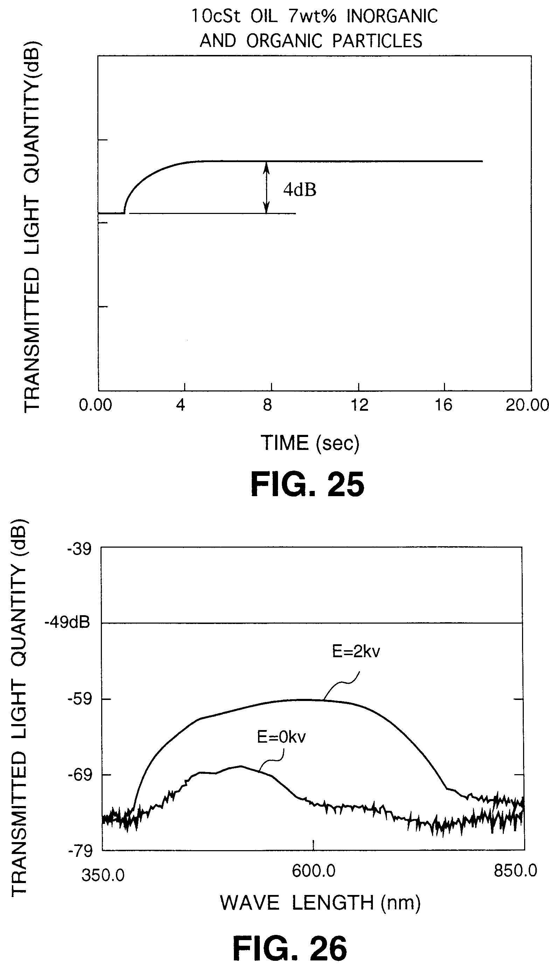

Fig. 25 is a graphic illustration of the relationship between the energization time to electrodes and the transmitted light intensity in the case of using the EA fluid produced by dispersing 7% by weight of EA particles in a silicone oil having a kinematic viscosity of 10 cSt;

Fig. 26 is a graphic illustration of the wavelength dependence of the transmitted light intensity for the EA fluid produced by adding 4% by weight of blue-colored EA particles into a silicone oil having a kinematic viscosity of 10 cSt;

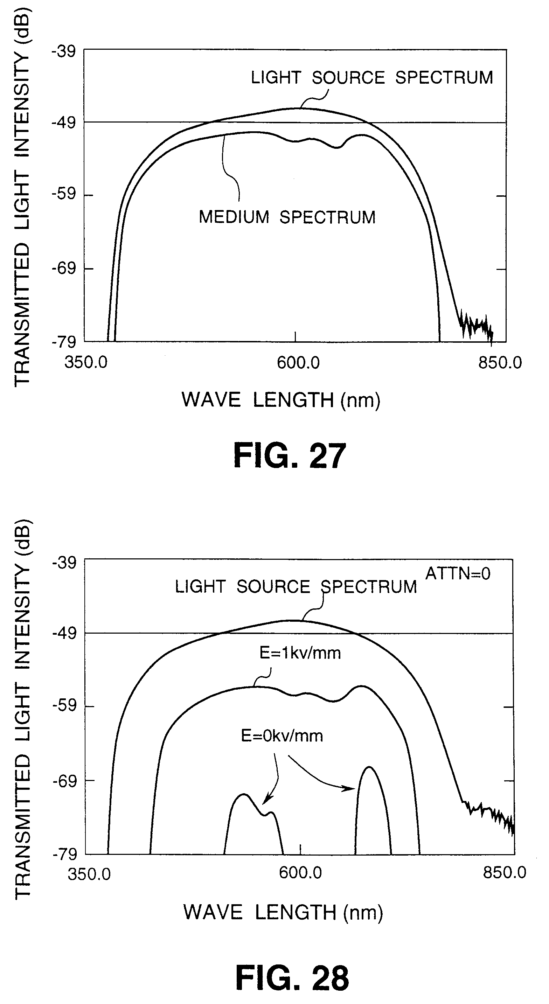

Fig. 27 is a graphic illustration of the wavelength dependence of the transmitted light intensity in the case of the measurement of the transmitted light intensity of only an electrical insulating medium made of a dimethyl silicone oil containing 0.1% by weight of a blue dye;

Fig. 28 is a graphic illustration of the wavelength dependence of the transmitted light intensity in the case that the measurement of the transmitted light intensity is made using an EA fluid in which 5% by weight of yellow-colored EA particles are dispersed in a silicone coil (electrical insulating medium) containing 0.1% by weight of a blue-colored dye;

Fig. 29 is a perspective view showing a structure of a conventional liquid crystal panel; and

Fig. 30 is across-sectional view showing a switching element of a thin film transistor used in a conventional liquid crystal drive circuit.

## Description of the Preferred Embodiment

### First Embodiment

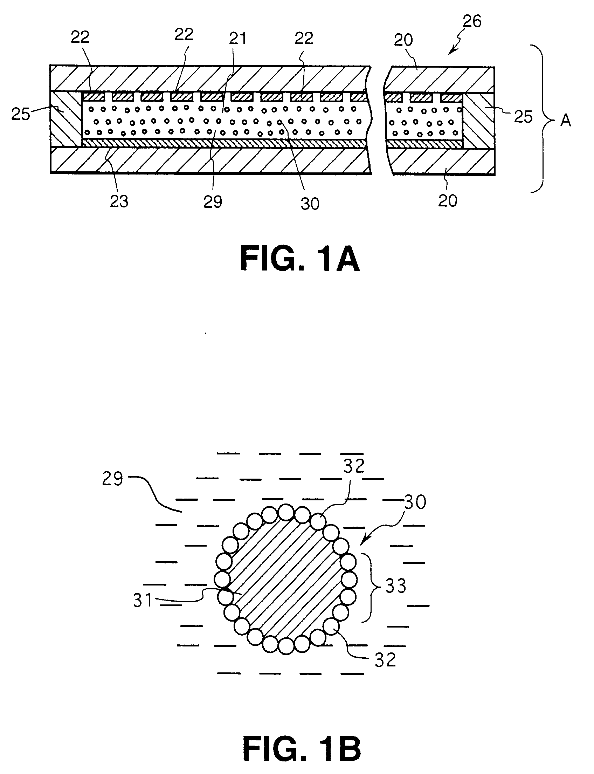

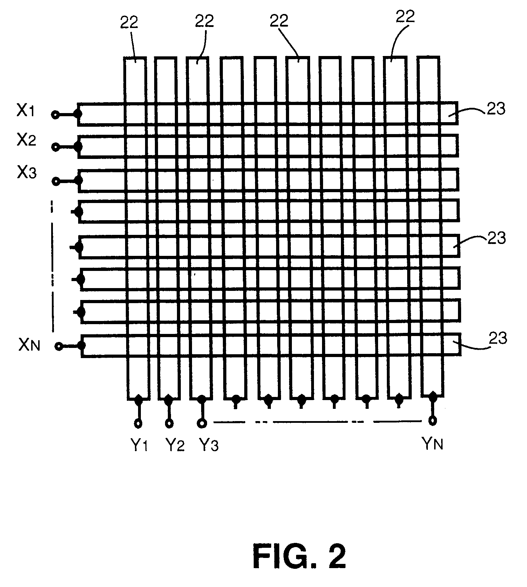

Referring to Figs. 1A to 4, a description will be made hereinbelow in terms of a first embodiment of the present invention. Fig. 1A illustrates a display device A according to the first embodiment. The display device A comprises a pair of transparent substrates (plates) 20, 20 spaced and disposed in parallel to each other, and further has an EA fluid 21 enclosed or sealed therebetween. On the lower surface of the upper side transparent substrate 20 there are formed a plurality of strip-like (rectangular) transparent electrodes 22 successively arranged along one direction, and on the upper surface of the lower side transparent substrate 20 there are also formed a plurality of strip-like transparent electrodes 23 successively arranged along a direction normal to the transparent electrode 22 arranged direction. Accordingly, the plurality of transparent electrodes 22 and the plurality of transparent electrodes 23 make a matrix-like configuration as shown in Fig. 2. In addition, a sealing member 25 is fitted in the circumferential edge sections of the transparent substrates 20, 20, thereby forming a plate-like transparent hollow housing 26 which contains the EA fluid 21 therein. End portions of the pluralities of transparent electrodes 22, 23 matrix-arranged are connected through outgoing lines to voltage supply sources $X_1$, $X_2$, ..., $X_n$, $Y_1$, $Y_2$, ..., $Y_n$, which individually apply positive or negative voltages to the transparent electrodes 22 and the transparent electrodes 23.

The foregoing transparent substrates 20, 20 are required to hold the EA fluid 21 therebetween and have a sufficient strength enough for transportation and installation, and hence, are preferable to be made up of transparent resin substrates constructed with glass plates, acrylic resins or the like. There is no need for the whole of the transparent substrates 20, 20 to be transparent, while it is possible that they are made to be transparent at only portions where light transmission is needed. Accordingly, it is allowed that the circumferential section is made with an opaque metallic frame or resin frame, whereas a transparent glass plate or resin plate is fitted in the frame. Further, although its configuration is not limited, a plate-like configuration is common. Any transparent conductive layer can be used as the transparent electrodes if having a transparency and electrical conductivity, there being an ITO (indium tin oxide),for example.

4

The EA fluid 21 is basically produced with inorganic and organic composite particles (hereinafter referred to as EA particles) 30 which have a structure as shown in Fig. 1B being dispersed in an electrical insulating medium 29. Each of the EA particles 30, as shown in Fig. 1B, is composed of a core body 31 made of a polymer compound and a surface layer 33 made of an electric alignment inorganic matter (hereinafter referred to as an inorganic EA material) 32.

As examples of the inorganic EA materials 32 there are inorganic ion exchangers such as hydroxides of polyvalent metals, hydrotalcites, acid salts of polyvalent metals, hydroxyapatite, nashicon-type compounds, clay minerals, potassium titanates, heteropolyacid salts and insoluble ferrocyanides, and further silica gels and electrical semiconductive inorganic matters. When such an inorganic EA material 32 forms the surface layer 33 on the core body 31 made of a polymer compound; the EA fluid 21 gets to have the electric alignment effect. For production of the EA particles 30, it is desirable that the surface layer 33 and the core body 31 are formed simultaneously.

Among the organic high-molecular compounds usable for the core bodies 31 of the EA particles 30 are poly(meth)acrylate, (meth)acrylate-styrene copolymer, polystyrene, polyethylene, polypropylene, nitrile rubber, butyl rubber, ABS resin, nylon, polyvinyl butyrate, ionomer, ethylene-vinyl acetate copolymer, vinyl acetate resin, polycarbonate resin and others, mixtures including one or more of these materials, or copolymers.

Furthermore, As the preferable materials suitable for the surface layers 33 of the EA particles 30, there are inorganic ion exchangers, electrical semiconductive inorganic matters and silica gels. If the solid particles made with these materials are dispersed in the electrical insulating medium 29, an excellent electric alignment effect takes place. As examples of the inorganic ion exchangers, there are hydroxides of polyvalent metals, hydrotalcites, acid salts of polyvalent metals, hydroxyapatite, nashicon-type compounds, clay minerals, potassium titanates, heteropolyacid salts and insoluble ferrocyanides.

A detailed description will be made hereinbelow in terms of these inorganic ion exchangers.

(1) hydroxides of polyvalent metals

These compounds are represented by a general formula $MO_x(OH)_y$ (M is a polyvalent metal, x is a number above 0, and y denotes a positive number). For example, among the hydroxides of polyvalent metals are titanium hydroxides, zirconium hydroxides, bismuth hydroxides, tin hydroxides, lead hydroxides, aluminum hydroxides, tantalum hydroxides, niobium hydroxides, molybdenum hydroxides, magnesium hydroxides, manganese hydroxides, iron hydroxides and so on. For instance, the titanium hydroxides include hydrous titanium oxides (another name: metatitanic acid or $\beta$ titanic acid, $TiO(OH)_2$) and titanium hydroxides (another name: orthotitanic acid or $\alpha$ titanic acid, $Ti(OD)_4$). This also applies to other compounds.

(2) hydrotalcites

These compounds are represented by a general formula $M_{13}Al_6(OH)_{43}(CO)_3 \cdot 12H_2O$ (M is a bivalent metal). For example, a bivalent metal M is Mg, Ca, Ni or others.

(3) acid salts of polyvalent metals

These materials include titanium phosphates, zirconium phosphates, tin phosphates, cerium phosphates, chrome phosphates, zirconium arsenates, titanium arsenates, tin arsenates, cerium arsenates, titanium antimonates, tin antimonates, tantalum antimonates, niobium antimonates, zirconium tungstates, titanium vanadates, zirconium molyodates, titanium selenates, tin molybdates, and so on.

(4) hydroxyapatites

These materials include, for example $H_3O$, calcium apatites, lead apatites, strontium apatites, cadmium apatites, and so on.

(5) nashicon-type compounds

These materials include, for example, $(H_3O)Zr_2(PO_4)_3$. In the present invention, it is also possible to use nashicon-type compounds in which $H_3O$ is substituted by Na.

(6) clay minerals

These materials are, for example, montmorillonites, sepiolites, bentonites, and other minerals. Of these, the sepiolite is particularly preferable.

(7) potassium titanates

These are expressed by general formula $aK_2O \cdot bTiO_2 \cdot nH_2O$ (a is a positive number satisfying $0 < a \leq 1$, and b denotes a positive number satisfying $1 \leq b \leq 6$, and n is a positive number), for instance, including $K_2 \cdot TiO_2 \cdot 2H_2O$, $K_2O \cdot 2TiO_2 \cdot 2H_2O$, $0.5K_2O \cdot TiO_2 \cdot 2H_2O$, $K_2O \cdot 2.5TiO_2 \cdot 2H_2O$, and so on. Of these compounds, the compounds in which a or b is not integer can easily be produced with the compounds in which a or b is an integer being acidificated and K being substituted by H.

(8) heteropolyacid salts

These are expressed by general formula $H_3AE_{12}O_{40} \cdot nH_2O$ (A is a phosphorus, arsenic, germanium, or silicon, and E denotes a molybdenum, tungsten, or vanadium, and n indicates a positive number), for example, including ammonium molybdophosphates, and ammonium tungstophosphates.

(9) insoluble ferrocyanides

These are expressed by a general formula $M_{b-pxa}A[E(CN)_6]$ where M is an alkali metal or hydrogen ion, A is a heavy metal ion such as lead, copper, nickel, cobalt, manganese, cadmium, iron (III) and titanium, E denotes iron (II), iron (III) cobalt or the like, b is 4 or 3, a indicates the valency of A, and p stands for a positive number of 0 to b/a, for example including insoluble ferrocyan compounds such as $Cs_2Zn[Fe(CN)_6]$ and $K_2Co[Fe(CN)_6]$.

The above-mentioned inorganic ion exchangers in (1) to (6) have an OH group, and include substitution type ion exchanges in which a portion or all the ions present in the ion exchange site of these inorganic ion exchangers are substituted by another ions. That is, if the aforesaid inorganic ion exchangers are expressed by R-$M^1$ ($M^1$ is the ionic species in the ion exchange site), the present invention includes a substitution type inorganic ion exchanger in which a portion or all of $M^1$ of R-$M^1$ is substituted by an ionic species $M^2$ different from the $M^1$. That is,

$$xR - M^1 + yM^2 \rightarrow Rx - (M^2)y + xM^1$$

where x and y each represents the valencies of ionic exchange species $M^2$ and $M^1$, respectively.

Depending upon the kind of the inorganic ion exchanger having an OH group, $M^1$ is generally $H^+$ in a case where the inorganic ion exchanger shows the cation exchangeability. In this case, $M^2$ can arbitrarily selected from metallic ions such as an alkali metal, alkaline earth metal, polyvalent typical metal, transition metal, and rare earth metal, other than $H^+$. In the case that the inorganic ion exchanger having the OH group indicates anion exchangeability, $M^1$ is generally $OH^-$, and in this case, $M^2$ is any one of anions other than $OH^-$ which include, for example, I, Cl, SCN, $NO_2$, Br, F, $CH_3COO$, $SO_4$, $CrO_4$, composite ions, and so on.

Moreover, in the inorganic ion exchangers in which, being once lost due to the high-temperature heating process, the OH group is again added through the water-submerged process or the like, the inorganic ion exchanger after the high-temperature heating processing is also one of the inorganic ion exchangers usable in the present invention, for example, nashicon-type compounds such as the materials obtained by heating, at a high temperature (500 to 700°C), hydrotalcite and $HZr_2(PO_4)_3$ obtainable by heating $(H_3O)Zr_2(PO_4)_3$. One or a plurality of ones of these inorganic ion exchanges can be used as the surface layer. As the inorganic ion exchangers, hydroxides of polyvalent metals or acid salts of polyvalent metals are particularly preferable.

As the other inorganic EA materials suitable for the surface layers 33 of the EA particles 30, there are metal oxides, metallic hydroxides, hydroxides of metal oxides, inorganic ion exchangers, one of these materials metal-doped, one of these materials placed as the electrical semiconductive layer on another carrier regardless of metal doping, and so on, which have electric conductivities of $10^3 \, \Omega^{-1}/cm$ to $10^{-11} \, \Omega^{-1}/cm$.

A further description will be made hereinbelow in terms of other inorganic EA materials. That is, there are:

(A) metal oxides: for example, $SnO_2$, amorphous type titanium dioxides (produced by Idemitsu Petrochemical Kagaku Co. Ltd.);
(B) metallic hydroxides: for example, titanium hydroxides, niobium hydroxides. The titanium hydroxides hydrous titanium oxides (produced by Ishihara Sangyo Co., Ltd.), metatitanic acid (another name: β titanic acid, $TiO(OH)_2$) and orthotitanic acid (another name: α titanic acid, $Ti(OH)_4$);
(C) hydroxides of metal oxides: for example, $FeO(OH)$ (gacite);
(D) hydroxides of polyvalent metals: the same compounds as the aforementioned (1);
(E) hydrotalcites: the same compounds as the aforesaid (2);
(F) acid salts of polyvalent metals: the same materials as the foregoing (3);
(G) hydroxyapatites: the same materials as the foregoing (4);
(H) nashicon-type compounds: the same materials as the aforementioned (5);

(I) clay minerals: the same materials as the aforementioned (6);

(J) potassium titanates: the same materials as the aforesaid (7);

(K) heteropolyacid salts: the same materials as the foregoing (8);

(L) insoluble ferrocyanides: the same materials as the foregoing (9);

(M) metal-doped inorganic EA materials: for improving the electric conductivity of the aforementioned (A) to (L), a metal such as antimony (Sb) is doped into an inorganic EA material, for example, antimony-doped tin oxides ($SnO_2$); and

(N) inorganic EA materials 32 placed as electrical semiconductive layers on other carriers: for example, among the carriers are inorganic particles made with titanium oxide, silica, alumina, silica-alumina or the like or organic high-molecular particles made with polyethylene, polypropylene or the like, and among the electrical semiconductive layer materials are antimony (Sb)-doped tin oxides.

The particles containing the inorganic EA material wholly become inorganic EA materials 32. The surface layer can simultaneously contain the two or more inorganic EA materials 32 mentioned above.

For the electrical insulating medium 29 of the EA fluid 21, all the materials which have been used for the electric alignment fluids can be employed. As examples, there are diphenyl chlorides, butyl sebacates, aromatic polycarbonate higher alcohol esters, halophenyl alkyl ethers, transformer oils, paraffin chlorides, fluorine-based oils, silicone-based oils, fluorosilicone-based oils and others, although any fluid and mixture are usable as long as being chemically stable and allowing the stable dispersion of the EA particles.

The electrical insulating medium 29 can be colored if required. When coloring it, it is desirable to use an oil soluble dye or dispersion dye which is of the type that is soluble in the selected electrical insulating medium 29 and maintains the electrical characteristics. There is no problem even if a dispersing agent, surface active agent, viscosity controlling agent, antioxidant, stabilizer and so on are included in the electrical insulating medium 29.

The inorganic and organic composite particles (EA particles) 30 can be produced in various ways. As one example, there is a way in which the core body particles 31 made of an inorganic and organic composite compound and the fine particles made of an inorganic EA material 32 are carried by means of a jet stream to come into coillsion with each other. In this case, the inorganic EA fine particles 32 run into the surfaces of the core body particles 31 at a high speed, thus being fixed thereto to form the surface layers 33 thereon. Another way is that the core body particles 31 are treated to float in a gas and a solution containing the inorganic EA material is sprayed toward the floating core body particles 31. In this case, after being adhered thereonto, the solution is dried to form the surface layers 33.

For production of the EA particles 30, the core bodies 31 and the surface layers 33 are preferable to be formed simultaneously. In this method, while the monomer of the organic high-molecular compound for forming the core bodies 31 is emulsion-polymerized, suspension-polymerized or dispersion-polymerized in a polymerization medium, the inorganic EA fine particles 32 are add to the monomer or the polymerization medium. The polymerization medium is preferable to be water, while a mixture of water and a water soluble organic solvent, and organic lean-solvent are also usable. According to this method, the monomer is polymerized in the polymerization medium to form core body particles, and at the same time the inorganic EA fine particles are aligned on the surfaces of the core body particles 31 so as to form surface layers 33 on the surfaces thereof, thus coating the core body particles 31.

In producing the inorganic and organic composite particles by means of the emulsion polymerization or suspension polymerization, a combination of the hydrophobic property of the monomer and the hydrophilic property of the inorganic EA material 32 allows most of the inorganic EA materials 32 to be aligned on the surfaces of the core body particles. According to the simultaneous formation method for the core bodies 31 and surface layers 33, the inorganic EA particles 32 can strongly and finely be adhered onto the surfaces of the core body particles 31 being made of a polymer compound, resulting in being firm inorganic and organic composite particles 30.

In the present invention, the EA particles 30 being used is not necessarily limited to spherical configurations, while, by means of the core body particle adjusting emulsion polymerization or suspension polymerization, the resultant EA particles 30 have substantially spherical configurations. If having the spherical configurations, as compared with other configurations it is advantageous in adjusting the transmitted light intensity because light can be scattered omnidirectionally.

Although the diameters of the EA particles 30 is not particularly limited, they are preferable to be between 0.1 to 500 μm, particularly between 5 to 200 μm. Further, although the diameters of the inorganic EA particles 32 are not particularly limited, they are preferable to be between 0.005 to 100 μm, more preferably between 0.01 to 10 μm. Accordingly, the specific gravity of the EA particles 30 is easily adjustable to be between 1.1 to 1.2 which is substantially equal to that of the electrical insulating medium 29, thus allowing the uniform dispersion.

In the EA particles 30, the weight ratio of the inorganic EA material 32 for formation of the surface layer 33 and the organic high-molecular compound for formation of the core body 31 is not particularly limited, while, for example, the weight ratio of (inorganic EA material):(organic high-molecular compound) is preferable to be in the range of (1 to 60):(99 to 40), particularly preferable to be in the range of (4 to 30):(96 to 70). If the weight ratio of the inorganic EA material 32 is below 1%, the resultant EA fluid 21 does not sufficiently show the EA effect. On the other hand, if exceeding 60%, an excessive current gets to flow into the resultant EA fluid 21.

The specific gravity of the EA particles 30 can relatively be made small as compared with the EA material 32 for the formation of the surface layers 33, for that the organic high-molecular compound with a relatively small specific gravity can be used for the core bodies 31. The specific gravity of the EA particles 30 is freely adjustable with the kinds and ratios of the organic high-molecular compound and the inorganic EA material, while the specific gravity is generally set to be approximately between 1.0 to 2.9 taking the electrical insulating medium to be used into consideration. If the difference in specific gravity between the EA particles 30 and the electrical insulating medium is large, the EA particles can sink in the medium, which makes difficult the uniform dispersion.

The surface layers 33 or core bodies 31 of the EA particles 30 can contain a dyestuff and a pigment for a coloration purpose. It is desirable that the pigment is mixed with the inorganic EA material 32 in forming the surface layers 33 being made of inorganic EA material 32 on the core bodies 31 in accordance with the foregoing method. For giving the dyestuff into the core bodies 31, it is possible to use a pigment or dye known as the dyestuff for the synthetic resin. This dyestuff can be in advance mixed with the monomer for the formation of the core bodies 31 before the monomer is polymerized, or can be added to the synthetic resin for the formation of the core bodies 31. With the EA particles 30 in which at least one of the surface layer 33 and the core body 31 contains the dyestuff, the scattering light from the resultant EA fluid 21 without voltage thereto can freely take various colors. For example, when a titanium hydroxide or silica gel is mixed therewith, the EA fluid 21 shows white, and when a copper phthalocyanine blue (produced by Dainichi Seika Kogyo Co., Ltd., cyanine blue S-32) being a blue pigment is mixed therewith, the EA fluid 21 can be colored in blue, and when a first yellow (NL first yellow 5G(S), produced by Dainichi Seika Kogyo Co., Ltd.) being a yellow pigment is mixed therewith, the EA fluid 21 can be colored in yellow. In addition, when a black triiron tetraoxide ($Fe_3O_4$) being an electrical semiconductive inorganic matter is mixed therewith, the EA fluid 21 can be colored in black, and when a ferric oxide ($Fe_2O_3$) being an electrical semiconductive inorganic matter is mixed with, the EA fluid 16 can be colored in red. Accordingly, the color display of the devices and meters is allowed.

In the EA particles 30 produced in the above-mentioned various ways, particularly, produced in the method in which the core bodies 31 and surface layers 33 can simultaneously be produced, a portion or whole of the surface layers 33 is covered with an organic high-molecular matter or thin films of additives such as dispersants and emulsifiers used in producing processes, whereby there is the possibility that the EA effect of the inorganic EA material 32 fine particles is unsatisfactorily shown.

The surface polishing of the EA particles 30 can be achieved in various ways. For instance, the EA particles 30 are dispersed in a dispersion medium such as water before stirred. In this case, it is also possible that abrasives such as sand particles and small balls are mixed with the dispersion medium and stirred together with EA particles 30, or that the stirring is carried out using grinding stones. Moreover, it is also appropriate that the EA particles 30 are dry-stirred using the abrasives and grinding stones without being put in such a dispersion medium.

A more preferable polishing method is to stir the EA particles 30 by means of a jet stream or the like. The particles violently come into collision with each other due to the jet stream. As preferable points, this method does not require abrasives, and can easily separate the inert materials peeled from the particle surfaces in classification. In the case of the aforesaid jet stream stirring, although difficulty is experienced in some degree to determine the polishing conditions on the basis of the kind of the stirring apparatus, stirring speed, and the kind of the material of the inorganic and organic composite particles, it is generally desirable that, for example, the stirring speed is 6000 rpm and the stirring time is 5 to 15 minutes.

The EA fluid 21 in the present invention can be produced with the EA particles 30 and, if required, other components such as dispersants being stirred and uniformly mixed with the electrical insulating medium 29 described above. Any kind of stirring machine is usable which is generally used in order to disperse solid particles in a liquid dispersion medium.

A description will be made hereinbelow in terms of the EA particle concentration effective to the display device according to the present invention, and further the kinematic viscosity of the electrical insulating medium 29 and the voltage being applied to the EA fluid.

The limitation is not particularly imposed on the concentration of the EA particles 30 in the electrical insulating medium 29, while it is preferable to be between 0.5% to 15% by weight. If the particle concentration is less than 0.5% by weight, the transmitted light control effect is sufficiently unobtainable. When exceeding 15% by weight, the particle concentration becomes excessively high, and accordingly the transparency sensation is not sufficiently obtainable irrespective of the orientation control of the EA particles 30 by the electric field application (which will be described later).

Preferably, the kinematic viscosity of this electrical insulating medium 21 is designed to be between 1 cSt to 3000 cSt. If the kinematic viscosity is below 1 cSt, the retention stability of the EA fluid lowers because of much volatile component, and on the other hand, if the kinematic is more than 3000 cSt, bubbles are generated therein and difficult to remove, thus providing troubles in treatment. For these reasons, the kinematic viscosity is preferable to be between 10 cSt to 1000 cSt, particularly between 10 cSt to 100 cSt.

Moreover, the voltage to be applied to the EA fluid 21 is in the range of 0.1 to 5.0 kV/mm, while a voltage higher than this range can also be applied thereto. The voltage being applied is preferable to be in the range of 0.25 to 1.5 kV/mm.

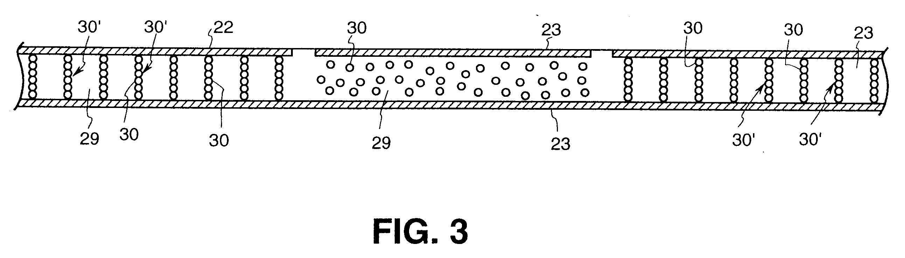

Secondly, a description will be made hereinbelow in terms of the principle of a graphic display on the Fig. 1A display device according to this embodiment. Fig. 3 is an enlarged view showing a state in which three transparent electrodes 22 are placed above the lower side transparent electrode 23. When the energization is not made to the middle transparent electrode 22 of the three transparent electrodes 22, an electric field is not applied to the EA fluid 21 existing under the transparent electrode 22, with the result that the EA particles 30 randomly float in the electrical insulating medium 29. In this state, light is scattered in various directions due to the presence of the EA particles 30 so that this portion takes an opaque state. For example, when the inorganic EA material 32 is a titanium hydroxide-based material, the EA fluid 21 appears to be cloudy in color, it looks just like a white frosted glass. In a case where at least one of the surface layer 33 and core body 31 of each of the EA particles 30 contains a dyestuff, the housing 26 appears to be an opaque frosted glass colored with that dyestuff. If the EA particles 30 have spherical configurations, the light is scattered in all the directions, there is hardly the possibility that the light is converged in a specific direction.

On the other hand, voltages are applied to the right and left-hand transparent electrodes 22, 22 and further applied to the lower side transparent electrode 23, electric fields are applied to the EA fluid 21 in areas between the transparent electrodes 22, 22 and the lower side transparent electrode 23, with the result that the large number of EA particles 30 are vertically joined with each other so as to form chain configurations 30' between the transparent electrodes 22 and 23, the chain configurations 30' being separated from each other and arranged in parallel to each other as illustrated. That is, the ratio of the EA particles 30 dispersed in the electrical insulating medium 29 is a relatively small value below approximately 10% by weight as described before, and therefore, if they are oriented to establish chain structures, gaps considerably larger than the diameters of the EA particles 30 are produced between the chain structures, whereby the light incident on the housing 26 in its thickness direction (vertical direction) can pass into the housing 26 without hardly attenuating, which can make the housing 26 transparent.

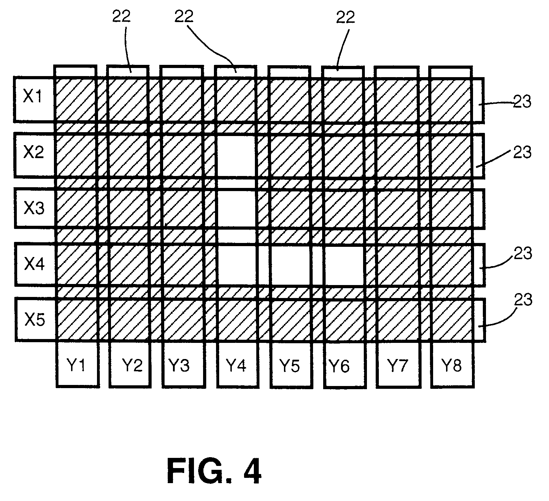

With the foregoing operation, due to the energization of the transparent electrodes 22, 23, the crossing sections of the transparent electrodes 22, 23 can turn from the opaque state into the transparent state, thus allowing the switching display between the transparent portion and the opaque portion. For example, when a character L is displayed, as shown in Fig. 4 the energization is made to the transparent electrode 23 connected with the voltage supply source $X_2$ and further the energization is made to the transparent electrode 22 connected to the voltage supply source $Y_4$ so that the EA fluid 21 in the crossing section of these transparent electrodes 22, 23 becomes transparent. Subsequently, the voltage application is stopped thereto, before the energization is made to the transparent electrode 23 connected with the voltage supply source $X_3$ and the energization is made to the transparent electrode 22 connected with the voltage supply source $Y_4$ so that the EA fluid 21 in the crossing section of these transparent electrodes 22, 23 becomes transparent. Thereafter, the same operations for the transparent electrodes 22, 23 connected with the voltage supply sources $X_4$ and $Y_4$, $X_4$ and $Y_5$, and $X_4$ and $Y_6$ are successively and repeatedly carried out at given time intervals (with a time difference). As a result, the character L can be displayed after a given time is elapsed as shown in Fig. 4. In this case, if a titanium oxide-based material is used as the inorganic EA material 32, the character L can be displayed in a transparent state against the cloudy background.

This embodiment is not limited to the foregoing energization operations for the character L display. It is also appropriate that voltages are applied to the corresponding transparent electrodes from the voltage supply sources $X_2$, $X_3$, $X_4$ and $Y_4$, before voltages are applied to the corresponding transparent electrodes from the voltage supply sources $X_4$, $Y_5$, and $Y_6$ when a given time is elapsed after the stopping of the voltage applications. The voltage applying order for the display is freely selectable.

When the EA particles 30 once take the oriented states due to the application of a voltage, the EA particles 30 remain in the oriented states for a while regardless of the releasing from the application of the voltage afterwards, and hence, if the energizations to the transparent electrodes 22, 23 are switched at short time intervals, the character display as shown in Fig. 4 is practicable by the intermittent application of the voltage. The maintenance time of the oriented state of the EA articulates 30 is appropriately adjustable with the kind of the EA particles 30 and the kinematic viscosity of the electrical insulating medium 29 the EA particles 30 have been dispersed. For example, when the kinematic viscosity of the electrical insulating medium 29 is low, the maintenance time become short. On the other hand, if the kinematic viscosity thereof becomes high, the maintenance time becomes long.

Accordingly, in the display device A, the EA fluid 21 can easily be switched from the opaque state to the transparent state or vice versa by means of the on-off control of the voltage from the voltage supply source, and desired characters, numerals, graphic patterns and the like can be displayed in accordance with the voltage applying manner to the transparent electrodes 22, 23. In addition, since the display device A can be driven with a voltage of 0.1 to 5.0 kV/mm and with an extremely small current of a maximum of several mA/m$^2$, a power of 10 W/m$^2$ is enough to drive it, thus constituting an energy-saving system. Further, since the EA particles 30 can substantially make the chain structures simultaneously with the energization to the transparent electrodes 22, 23, a sufficient responsibility is obtainable. Moreover, if the transmitted light intensity control is made through the EA fluid 21, since the transmitted light intensity is uniformly controllable over all the wavelength areas with no occurrence of absorption of specific light, there is no possibility of heating due to the light absorption, thus providing an energy-unwasted display device. Furthermore, since the EA particles 30 remain in the same state for a while even if the application of the voltage is cut off after being once oriented in response to the application of the electric field, it is possible that the voltage is intermittently applied to the transparent conductive layers 17, 17, thus allowing an energy-saving driving accordingly.

Since as described above the display device A is composed of the EA fluid 21 produced by dispersing solid particles with the electric alignment effect in the electrical insulating medium 29, the hollow housing 26 having two opposed surfaces at least portions of which are transparent and containing the EA fluid 21, and the transparent electrodes 22, 23 formed on the housing 26, its structure is simple and its manufacturing cost is extremely lower than those of the conventional liquid crystal devices. For example, the cost of the EA fluid is below 1/10 of the cost of the liquid crystal material. In addition, the liquid crystal device requires liquid crystal driving electric circuits, control circuits, driving LSIs and so on, while the display device according to this embodiment basically uses the strip-like transparent electrodes 22, 23 in place thereof This realizes a display device with a simple structure at an extremely low manufacturing cost.

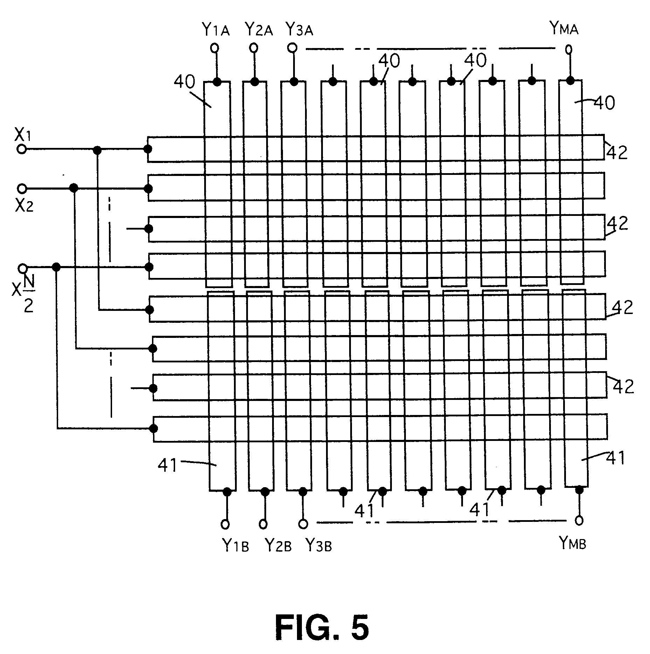

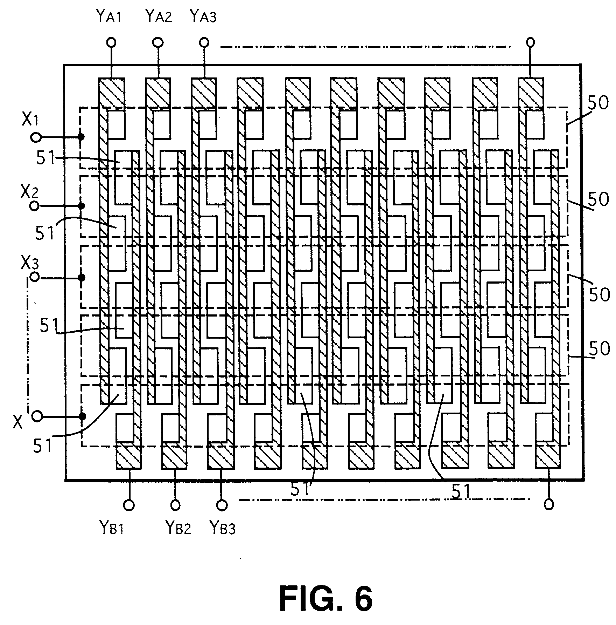

Although in this embodiment the transparent electrodes 22, 23 having the same length are crossing each other to make a matrix-like configuration, it is also possible that the transparent electrodes 22, 23 are arranged to make different configurations. For example, as shown in Fig. 5, vertical strip-like transparent electrodes 40, 41 are arranged longitudinally and horizontal strip-like horizontal transparent electrodes 42 are disposed to cross the longitudinally arranged vertical strip-like transparent electrodes 40, 41 to make a matrix-like configuration, the length of each of the vertical strip-like transparent electrodes 40, 41 is substantially half the length of each of the horizontal strip-like transparent electrodes 42. Further, as shown in Fig. 6, vertical transparent electrodes 51 are arranged longitudinally to be spaced from each other to entirely cross horizontal transparent electrodes 50 to make a matrix-like configuration. The width of the horizontal transparent electrodes 50 is larger than that of the vertical transparent electrodes 51 and each of the vertical transparent electrodes 51 spreads over two adjacent horizontal transparent electrodes 50.

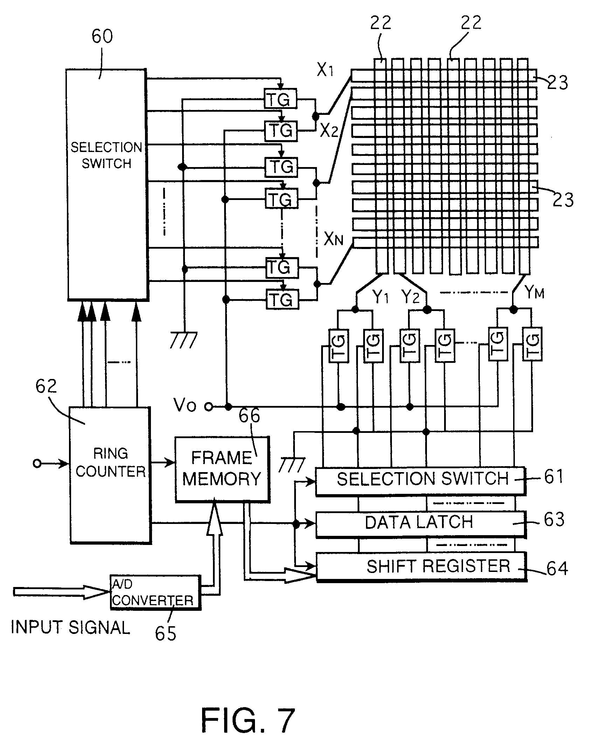

Fig. 7 shows one example of a pulse drive circuit for the transparent electrodes 22, 23 as shown in Fig. 2. The transparent electrodes 23 are connected through timing gates (TG) to a selection switch 60 and the transparent electrodes 22 are coupled through timing gates (TG) to another selection switch 61. The selection switch 60 is connected with a ring counter 62, while the selection switch 61 is connected to a data latch 63 and further to a shift register 64. The output of the ring counter 62 and the output of the an A/D converter 65 responsive to an input signal are inputted through a frame memory 66 to the shift register 64. This circuit arrangement can selectively control the energization to the transparent electrodes 22, 23 in accordance with an input pulse signal. That is, in response to pulse code signals inputted at an appropriate period, a voltage is applied to the transparent electrodes 22, 23 successively selected, with the result that the EA fluid 21 at the selected position is exposed to an electric field and takes a transparent or opaque state for a desired graphic display.

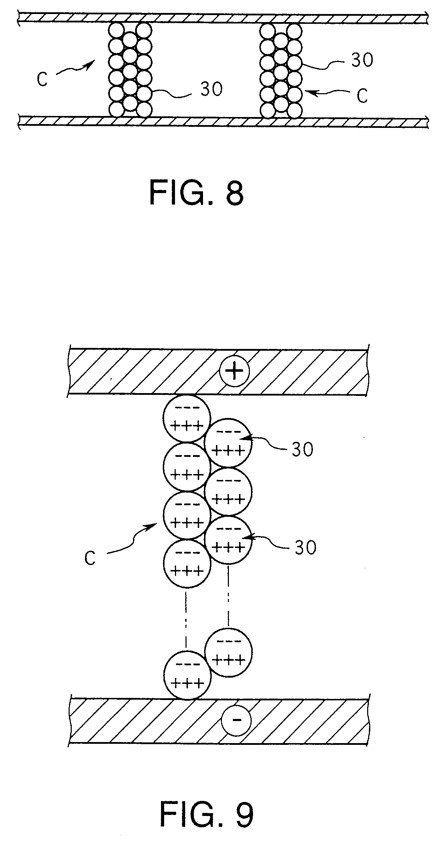

Although in the present invention the inorganic and organic composite particles 30 turn into single-chain configurations which in turn, are arranged in parallel to each other when an electric field is applied thereto, if the quantity of the inorganic and organic composite particles 30 increases to exceed 1% by weight, a plurality of chain configurations are joined with each other to organize columns C as shown in Fig. 8. In each column C, the EA particles 30 of the adjacent chain configurations are longitudinally shifted by one from each other. As to this phenomenon, the inventors assume that the EA particles 30, dielectric-polarized into + pole portions and - pole portions as shown in Fig. 9, becomes more stable in energy when being alternately adjacent to each other due to the attraction between the + pole portions and the - pole portions.

Accordingly, in cases where the content of the EA particles 30 is large, a number of columns C are produced between the electrodes, by which production the transmitted light intensity increases. In this case, since a number of EA particles 30 are grouped into a plurality of columns C, the separation between the adjacent columns C becomes large, which serves to increase the transmitted light intensity.

The reason why the diameters of the EA particles 30 are determined to be in the range of between 0.1 to 500 $\mu$m, more preferably between 5 to 200 $\mu$m, is that the EA particles 30 function as light scattering type particles or light reflection type particles. As well known, the wavelength of the visible light is in the range of between 380 to 780 nm, that is, between 0.38 to 0.78 $\mu$m, and for the light with such a wavelength being scattered or reflected for the transmitted light control purposes, the diameters of the EA particles 30 need to be at least more than 0.1 $\mu$m, more preferably over 5 $\mu$m. On the other hand, in a case where ultra-fine conductive particles having diameters smaller than the wavelengths of the visible light causing the Brownian motion, for example, having diameters of 5 run to several tens run (= 0.005 to 0.02 $\mu$m) are dispersed in the electrical insulating medium 29, the orientation of the ultra-fine particles is considered possible, while in this case the light transmission mechanism is totally different from that in the present invention, with the result that the ultra-fine particles are dispersed in a state with no electric field so as to completely permit the transmission of light and are oriented in a state with application of an electric field so as to scatter and attenuate light. That is, undesirable and totally different behaviors take place.

Furthermore, TiBaO$_4$ particles are considered as the foregoing ultra-fine conductive particles, while the specific gravity of TiBaO$_4$ is as great as being in the range between 4 and 6. Supposing that the TiBaO$_4$ particles are made to be large in diameter for the light reflecting purposes, they gravitationally sink for the difference in specific gravity from the electrical insulating medium 29, whereby difficulty is encountered to uniformly disperse the particles. In addition, for uniformly dispersing the TiBaO$_4$ particles in the electrical insulating medium 29, the electrical insulating medium 29 needs to be large in specific gravity, while the electrical insulating medium with a specific gravity of approximately 4 to 6 has not yet been found. On the other hand, the necessary specific gravity of the inorganic and organic composite particles 30 in the present invention is readily adjustable to around 1.2 as described above, which allows the utilization of various kinds of electrical insulating media.

Secondly, considering a coloring aspect, difficulty is experienced to color the foregoing ultra-fine particles, and even assuming that the coloring is possible, the diameters of the particles are too small, for which reason the ultra-fine particles dispersed in the electrical insulating medium 29 is impossible to visibly color. Accordingly, the use of the ultra-fine particles makes only the color of the electrical insulating medium 29 appear. That is, the practicable coloring pattern is just one. For instance, only the variation between transparent red and opaque red is practicable.

Whereas, according to the present invention, for example, in a case where the medium is designed to be transparent and red in color and the EA particles are made of be white in color, the color variation between cloudy transparency and red transparency is practicable. Further, in a case where the medium is colorless and transparent and the EA particles are blue in color, the color variation between blue transparency and colorless transparency. Moreover, in the case that the medium is red and the EA particles are blue, the color variation takes place between purple transparency and red transparency. Still further, in the case that the medium is light blue and the EA particles are yellow, the color variation takes place between opaque yellowish green and light blue transparency. In addition, taking notice of the portions to be colored, the coloring of both the core bodies 31 and surface layers 33 of the inorganic and organic composite particles 30 and the electrical insulating medium 29 is possible, and the color variation is easy. The surface of the core body 31 of each of the inorganic and organic composite particles 30 is covered with an inorganic matter, and since the color is exposed from the gaps between the inorganic matters, the color of the core body 31 colored is effectively reflexible relative to the color of the EA fluid.

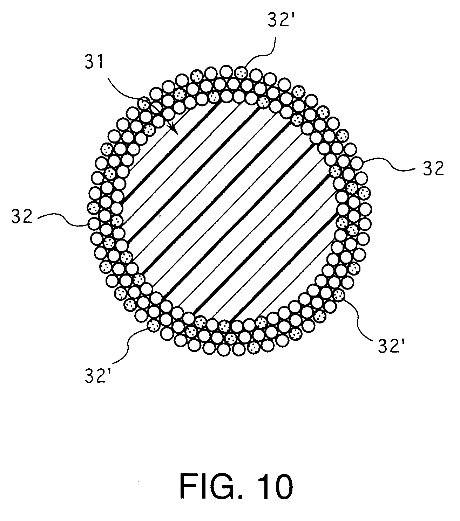

Furthermore, for coloring the surface layers 33 of the EA particles 30, a coloring inorganic pigment can be mixed evenly by a necessary quantity into the inorganic and organic composite particles to be used in producing the EA particles 30. In the EA particles thus produced, as shown in Fig. 10, some of inorganic matter particles adhered to the periphery of the core body 31 are replaced with the coloring inorganic pigments 32'. Thus, the coloring of the inorganic and organic composite particles becomes possible.

Second Embodiment

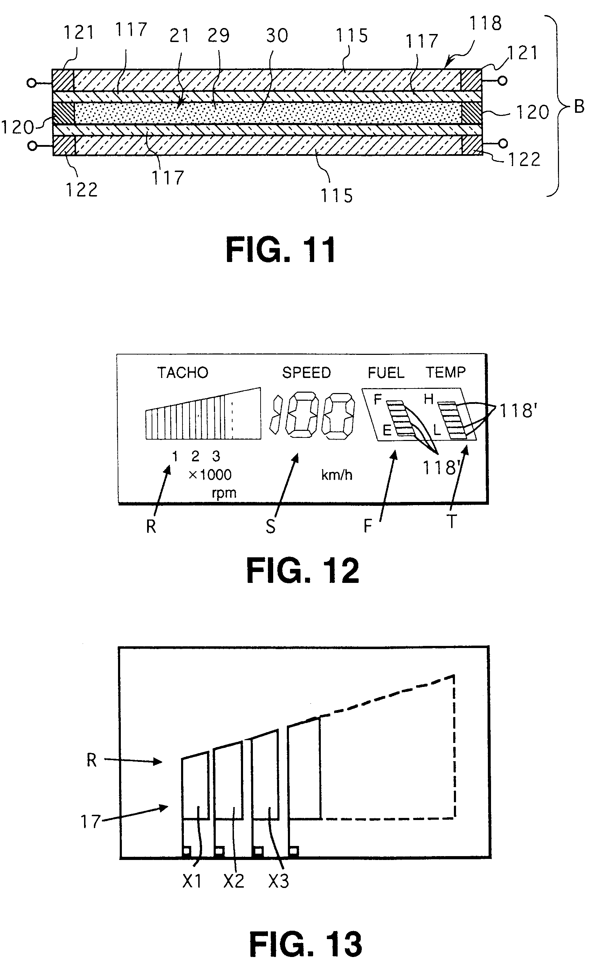

Furthermore, a description will be made hereinbelow in terms of a second embodiment of the present invention. Fig. 11 is a cross-sectional view showing a display device according to the second embodiment of the present invention. The display device, designated at character B, is composed of a pair of transparent substrates (plates) 115, 115 which are spaced by a given distance and disposed in opposed and parallel relation to each other. The pair of transparent substrates 115, 115 have, on their opposed inner surfaces, transparent conductive layers 117, 117, respectively. These transparent conductive layers 117, 117 are formed to have patterns as shown in Fig. 12 (in this embodiment, graphic patterns of meters employed in motor vehicles or the like). A sealing member 120 is fitted in the circumferential edge sections of the transparent substrates 115, 115 so as to form a plate-like hollow transparent housing 118. An EA fluid 21, being similar to the EA fluid described in the foregoing first embodiment, is enclosed in the hollow transparent housing 118.

In addition, at the circumferential sections of the transparent substrates 115, 115, there are provided electrode sections 121, 122 which are electrically coupled to the transparent conductive layers 117, 117. As shown in Figs. 15 and 16, these electrode sections 121, 122 are connected through a switch 124 to a power supply 123. As well as the foregoing first embodiment, the transparent substrates 115, 115 are required to hold the EA fluid 21 therebetween and have a strength enough to transport and installation, and hence, are preferable to be made up of transparent resin substrates constructed with glass plates, acrylic resins or the like. There is no need for the whole of the transparent substrates 115, 115 to be transparent, while it is possible that they are made to be transparent at only portions where light transmission is needed. Accordingly, it is allowed that the circumferential section is made with an opaque metallic frame or resin frame, whereupon a transparent glass plate or resin plate is fitted in the frame. Further, although its configuration is not limited, a plate-like configuration is common.

The transparent conductive layers 117, 117, as shown in Fig. 12, are formed to have, for example, a graphic pattern for a tachometer R indicative of the engine speed, a graphic pattern for a speedometer S, a graphic pattern for a fuel gauge F, and a graphic pattern for a temperature gauge T. First, a description will be made about the graphic patterns for the tachometer R and the speedometer S. As shown in Fig. 13, the transparent conductive layer 117 corresponding to the entire configuration of the tachometer R is divided into a plurality of sections arranged in parallel to constitute a belt-like graduation. In the illustration, the divisions X1, X3, ..., Xn become vertically and gradually longer toward the right-hand direction and the rightmost division has a maximum length. That is, the transparent conductive layer 117 corresponding to the tachometer R is entirely formed to have a substantially trapezoidal configuration which in turn, is divided vertically and in parallel.

Furthermore, the transparent conductive layer 117 corresponding to the speedometer S, as shown in Fig. 14A, has graphic patterns on a two-dimensional plane, each graphic pattern comprising two elongated vertical sections 117a and three horizontal sections 117b extending between the two vertical sections 117a, to constitute a digital graduation. One end portions of the vertical sections 117a and horizontal sections 117b extend and are arranged to form comb-tooth configurations. The electrodes 121, 122 are disposed at positions corresponding to the comb-tooth end portions. In addition, an insulating materials 140 is fitted between the comb-tooth end portions. In other words, these transparent conductive layers 117 form a static type display configuration. When an electric field is applied to the vertical sections 117a and the horizontal sections 117b of the transparent conductive layers 117, 117, the EA fluid 21 operates for a digital display as shown in Fig. 14B. In this embodiment this display device is applied to the speedometer S, for example, it is also possible to apply this display device to a clock to display the time.

Moreover, each of the fuel gauge F and the temperature gauge T is composed of a plurality of arranged housings 118' each being constructed as described above. That is, the housing 118' comprises a pair of opposed transparent substrates 115, 115, transparent conductive layers 117, 117 formed on the inner surfaces of the opposed transparent substrates 115, 115, and an EA fluid packed between the transparent substrates 115, 115. In these meters R, S and gauges F, T, the opposed transparent conductive layers 117, 117 have the same shape.

The EA fluid 21 to be used in this embodiment is basically the same as the EA fluid 21 in the foregoing first embodiment of the present invention, and the description will be omitted for simplicity.

In addition, a description will be made hereinbelow in terms of the principle of the transmitted light intensity control in the display device B according to this embodiment. Fig. 15 shows a state in which the switch 124 is in the open state so that the transparent conductive layers 117, 117 are not in the energized state. In this state, the EA particles 30 randomly float in the electrical insulating medium 29. If light is incident on the housing 118 in this state, the light is scattered in various directions due to the presence of the EA particles 30, with the result that the housing 118 becomes opaque. For example, a titanium hydroxide-based material is used as the inorganic EA material 32, the housing 118 becomes cloudy. Further, if a dyestuff is contained in at least one of the surface layers 33 and core bodies 31, the housing 118 results in the color of that dyestuff. If the EA particles 30 have spherical configurations, the light can be scattered in all the directions, but not scattered in a specific direction.

Secondly, when as shown in Fig. 16 the switch 124 turns into the closed state to carry out the energization to the transparent conductive layers 117, 117, the EA particles 30 are joined with each other between the transparent conductive layers 117, 117 to form chain structures or configurations 30' arranged in parallel to each other and extending in directions perpendicular to the surfaces of the transparent conductive layers 117, 117. As described above, the ratio of the EA particles 30 dispersed in the electrical insulating medium 29 is a relatively small value below approximately 10% by weight, and therefore, if they are oriented to establish chain structures, gaps considerably larger than the diameters of the EA particles 30 are produced between the chain structures, whereby the light incident on the housing 118 in its thickness direction (vertical direction) can pass into the housing 118, which can make the housing 118 transparent.

With the foregoing operation, due to the energization of the transparent conductive layers 117, 117, the housing 118 can be switched from the opaque state to the transparent state, thereby accomplishing a desired display. Accordingly, when the display device with the above-mentioned structure is applied to the various meters R, S and gauges F, T as shown in Fig. 12, due to the on/off control of the power from the power supply, they can readily be switched from the opaque state to the transparent state, thus allowing the displays of the graduations. That is, in the case of the tachometer R, the divisions of the transparent conductive layers 117 can be displayed so as to indicate the current engine speed. Furthermore, the speedometer S can display the speed of a motor vehicle by means of the vertical sections 117a and the horizontal sections 117b. Moreover, the fuel gauge F and the temperature gauge T can display the fuel quantity and the engine temperature of the motor vehicle on the basis of the positions of the housings 118' switched to the transparent states. As well as the aforementioned first embodiment, the display meters and gauges according to this embodiment can accomplish energy-saving operations because of being operable with an extremely small current, and does not produce heat due to light absorption. In addition, the EA particles 30 of the EA fluid 21 remain in the transparent state for a while after the application of the electric field stops, which allows the intermittent operation. The maintenance time depends upon the kind of the EA particles 30 and the kinematic viscosity of the electrical insulating medium 29.

The display device according to this embodiment is equipped with a hollow housing with two opposed surfaces, at least portions of which are transparent and which have transparent conductive layers each being divided into sections, and further provided with the EA fluid containing the EA particles and the electrical insulating medium and packed between the two opposed surfaces, the divided sections arranged in parallel to each other constituting a graduation of a meter for motor vehicles and so on. Accordingly, the structure becomes simple and the display device can be manufactured at an extremely lower cost as compared with the conventional liquid crystal device as described in the first embodiment.

Although in this embodiment the tachometer R entirely has a substantially trapezoidal configuration divided into sections X1, X2, ..., Xn and the speedometer S has a graphic pattern to carry out the digital display, it is also appropriate that they have an analog type graphic pattern as shown in Fig. 17A. That is, transparent conductive layers being divisions 150 are arranged successively at given intervals so as to form a circular configuration on a plane. In other words, the divisions 150 are disposed on lines extending radially from a given point on a plane so as to wholly make a circular configuration. In the illustration, the divisions 150 is 60 in number, and the circumferential portions of the divisions 150 are connected to electrodes, not shown, respectively. A similar circled transparent conductive layer pattern is formed and disposed in opposed relation to the aforesaid circled transparent conductive layer pattern and the EA fluid 21 is packed therebetween, whereby an analog display is possible by the application of an electric field to the divisions 150 so that each of the divisions 150 serves as a pointer of the meters. This device can also be employed for the analog display of the time as shown in Fig. 17B.

A further description will be made hereinbelow in terms of a modification of the foregoing display device for the speedometer S and the clock. In this modification, as shown in Fig. 18 a matrix type graphic pattern is employed in place of the static type graphic pattern. That is, in Fig. 18, the display device has graphic patterns on a two-dimensional plane, each graphic pattern comprising two elongated vertical sections 117c electrically connected with each other and three horizontal sections 117d extending between the two vertical sections 117c electrically connected with each other. One end portions of the vertical sections 117c and horizontal sections 117d extend and are arranged to form comb-tooth configurations, and are connected to the electrodes 122. In addition, an insulating materials 140 is fitted between the electrodes 122. When different voltages are applied to the vertical sections 117c and the horizontal sections 117d at different timings, this display device indicates a digital figure as shown in Fig. 14B.

Furthermore, it is also appropriate that as shown in Fig. 19 diagonal sections are further provided in addition to the aforesaid vertical sections and horizontal section. With this arrangement, it is possible to display not only figures but also alphabetical characters.

Although in the above-described embodiments a pair of transparent conductive layers or electrodes are used to make a single-laminated structure, it is also possible that a plurality of transparent conductive layers are used to construct a plural-laminated structure.

Furthermore, if an illuminator, which can emit colored light, is placed at an appropriate position so as to illuminate the transparent substrates, the coloring of the transparent sections can readily be achieved with the illumination. It is also appropriate that illuminating means such as an electric lamp or laser is placed outside the housing, which can make the transparent sections brighter for a sharper display. Moreover, it is also possible that coloring means such as a colored paraffin sheet is placed between the illuminating means and the housing.

Experimental Examples

A description will be made hereinbelow in terms of manufacturing and experimental examples according to the present invention.

In the foregoing first embodiment, two glass substrates were prepared, each of the two glass substrates having a plurality of strip-like transparent electrodes each being made of an ITO (indium tin oxide) and being several centimeters in width and 1,0 $\mu$m in thickness. The two glass substrates were disposed in opposed and parallel relation to each other to be spaced by 2 $\mu$m from each other so that the transparent electrodes of one glass substrate crossed the transparent electrodes of the other glass substrate. The peripheral sections of the two glass substrates were covered with a sealing member. An injection hole were formed in a portion of the sealing member and the EA fluid was injected through the injection hole thereinto, before the injection hole was closed, thus producing a graphic display device as shown in Fig. 1A.

In the second embodiment, two glass substrates were prepared, each of the two glass substrates having thereon a plurality of belt-like transparent conductive layers (divisions X1, X2, X3 for a tachometer) which are arranged successively in parallel, each being made of an ITO (indium tin oxide) and being 1.0 $\mu$m in thickness. The two glass substrates were disposed in opposed and parallel relation to each other to be spaced by 2 $\mu$m from each other so that the transparent conductive layers on the two glass substrates are positioned in opposed relation to each other. The peripheral sections of the two glass substrates were covered with a sealing member. An injection hole were formed in a portion of the sealing member and the EA fluid was injected through the injection hole thereinto, before the injection hole was closed, thus producing a graphic display device as shown in Fig. 11.

The production example of the EA fluid used is as follows.

A mixture of a titanium hydroxide (common name: hydrous titanium oxide produced by Ishihara Sangyo Co., Ltd., C-II) (40 g), a butyl acrylate (300 g), a 1,3-butylene glycol dimethacrylate (100 g) and a polymerization initiator was dispersed in water (1800 ml) containing a tertiary calcium phosphate as a dispersing stabilizer and suspension-polymerized while being stirred at a temperature of 60°C for one hour. The resultant product was filtered and acid-cleaned before water-cleaned and dried, thus obtaining inorganic and organic composite particles. Thereafter, using a jet stream agitator (hybridizer, manufactured by Nara Kikai Seisakusho Co., Ltd.), the inorganic and organic composite particles obtained were agitated with jet stream, before surface-polished, thereby producing the inorganic and organic composite particles. The specific gravity of the produced particles was 1.157, the average diameter thereof was 13.7 $\mu$m. The particles were uniformly dispersed in silicone oils (produced by Toshiba Silicone Co., Ltd., TSF451 series) with various kinematic viscosities so that its inclusion takes various weight % rates, thus obtaining the EA fluids in which the kinematic viscosity of the electrical insulating medium (silicone oil) is fixed and the particle concentration takes various values, and further EA fluids in which the particle concentration is fixed and the kinematic viscosity of the electrical insulating medium takes various values.

Experimental Results

Measurments of the transmitted light intensity were made using the foregoing various EA fluids. In these experiments, the strength of the light incident on a housing and the strength of the light passing therethrough were detected by means of optical sensors. The comparison values were expressed in dMm as the increase of light (increasing light). In this case, the increase by 3.2 dBm indicates the increase by 2.09 times in optical power and the increase by 4.2 dBm means the increase by 2.63 times in optical power.

Fig. 20 shows the measurement results of the increasing light in accordance with the parameters of the concentration (percent by weight) of the inorganic and organic composite particles and the applied electric field strength (kV/mm) in the case that the kinematic viscosity of the silicone oil (base oil) was 10 cSt. Fig. 21 shows the experimental results thereof in the case that the kinematic viscosity of the silicone oil was 50 cSt, and Fig. 22 shows the experimental results thereof in the case that the kinematic viscosity of the silicone oil was 100 cSt.

From the results shown in Figs. 20 to 22, when the electric field strength varied from 0.25 kV/mm to 1.5 kV/mm at a EA particle concentration of 0.5 to 15% by weight, in every case the dBm value of the increasing light increased in accordance with the increase in the electric field strength. Thus, the present invention can effectively carry out the transmitted light control. In the case that the particle concentration was 1.0% by weight, even if the electric field strength was 3 kV/mm, the increasing light ratio becomes small. For this reason, it was found that the particle concentration was preferable to be over 2.5% by weight.

Fig. 23 shows the measurement results of the increasing light (dBm) in accordance with the parameter of the kinematic viscosity of the silicone oil and the electric field strength in the case that the particle concentration is fixed to 5.0% by weight, and Fig. 24 shows the experimental results thereof in the case that the particle concentration is fixed to 7.5% by weight. From the results shown in Figs. 23 and 24, irrespective of kinematic viscosity, the dBm value of the increasing light increased as the applied voltage increased in the range of 0.5 to 3 kV/mm. Accordingly, it was found that the control of the transmitted light intensity control was possible by the embodiments of the present invention, besides a larger increasing light was obtainable as the application voltage increased in the range of 0.25 to 1.5 kV/mm.

Fig. 25 shows the relationship between the energization time to the electrodes and the variation of the transmitted light intensity using an EA fluid in which 7% by weight of inorganic and organic composite particles are dispersed in a silicone oil whose kinematic viscosity is 10 cSt. For the measurement of the transmitted light intensity, light was projected to a transparent glass housing containing an EA fluid from a light source placed above the housing and an optical sensor was located under the housing to obtain the light and analyze the light power. As obvious from this illustration, the transmitted light intensity substantially started to increase simultaneously with the energization made when approximately 1 second was elapsed after the start of the measurement and reached a maximum after the elapse of 3 to 4 seconds and became stable.

Fig. 26 illustrates the relationship between the transmitted light intensity and the wavelength in the case that the transmitted light intensity was measured using the EA fluid in which 4% by weight of EA particles colored in blue were dispersed in a silicone oil having a kinematic viscosity of 10 cSt. For coloring the EA particles, 20% by weight of the inorganic EA material for constituting the surface layers was substituted by a blue pigment during the production of the EA particles. In the illustration, the curve of E = 0 kV indicates the transmitted light intensity without the electric field, and the curve of E = 2 kV indicates the transmitted light intensity at application of the electrical potential of 2 kV to the electrodes. As obvious from the comparison between both the curves in Fig. 26, the blue EA fluid allows much transmission of blue light with a short wavelength without the electric field, while permits light transmission in a wide wavelength range at application of the electric field, in other words, the EA fluid turns from the blue-colored state into the transparent state.

Fig. 27 shows the wavelength dependence of the transmitted light intensity in the case of the measurement of the transmitted light intensity of only an electrical insulating medium (not including the EA particles) made of a dimethyl silicone oil containing 0.1% by weight of a blue dye. This electric insulating medium appears to be light blue when been seen with the naked eye. In Fig. 27, comparing the light source spectrum with the medium spectrum, the light absorption occurred at portions other than the blue spectrum portion of short wavelengths. It is obvious from this that the electrical insulating medium permits much transmission of blue and, hence, is blue in color.

Fig. 28 shows the wavelength dependence of the transmitted light intensity in the case of the measurement of the transmitted light intensity of the EA fluid in which 5% by weight of yellow-colored EA particles are dispersed in an electrical insulating medium made of a dimethyl silicone oil containing 0.1% by weight of a blue dye. The coloring of the inorganic and organic composite particles was done in the same manner as in the aforementioned example except for use of a yellow pigment. Shown in Fig. 28 are a light source spectrum, transmitted light spectrum at E = 0 kV/mm, and transmitted light spectrum at E = 1 kV/mm. From the illustration, the EA fluid is opaque and greenish yellow being the mixed color of blue and yellow at no application of the electric field thereto, while turning into a blue transparent state close to colorless transparency at application of the electric field thereto. Accordingly, the EA fluid can take various color variations including transparent states in different color, transparent states in same color and colorless transparent states.

The following Tables 1 and 2 show the measurement results[dBm] of transmitted light at different wavelengths in the case that 5.0% by weight of EA particles are dispersed in a silicone oil (base oil) whose kinematic viscosity is 50 cSt. In this case, the average increasing light becomes 4.2 dBm.

Table 1

| Applied Electric Field Strength[kV/mm] | Measurement Wavelength[nm] | | | | | | | |
|---|---|---|---|---|---|---|---|---|
| | 400 | 500 | 600 | 700 | 800 | 900 | 1000 | 1100 |
| Initial State | -18.4 | -19.5 | -20.7 | -21.5 | -22.1 | -22.5 | -22.6 | -16.9 |
| 0 | 0.53 | -0.61 | -1.76 | -2.59 | -3.13 | -3.55 | -3.69 | 2.09 |
| 0.25 | 2.66 | 1.50 | 0.34 | -0.51 | -1.00 | -1.41 | -1.54 | 4.22 |
| 0.5 | 3.50 | 2.37 | 1.25 | 0.39 | -0.16 | -0.55 | -0.70 | 5.02 |
| 1.0 | 4.38 | 3.25 | 2.12 | 1.25 | 0.69 | 0.30 | 0.18 | 5.93 |
| 1.5 | 4.72 | 3.63 | 2.48 | 1.64 | 1.08 | 0.72 | 0.60 | 6.36 |

Table 2

| Values at 1.5[kV/mm] | 4.72 | 3.63 | 2.48 | 1.64 | 1.08 | 0.72 | 0.60 | 6.36 |
|---|---|---|---|---|---|---|---|---|
| Values at -)0[kV/mm] | 0.53 | -0.61 | -1.76 | -2.59 | -3.13 | -3.55 | -3.69 | 2.09 |
| Increasing Light[dBm] | 4.19 | 4.24 | 4.24 | 4.23 | 4.21 | 4.27 | 4.29 | 4.27 |

From the results shown in the Tables 1 and 2, in the control of the devices according to the present invention, uniform light transmission property is obtainable over a wide wavelength range of 400 to 1100 nm, and uniform transmitted light intensity adjustment is possible over a wide wavelength area. The visible light has a wavelength range of 480 to 780 nm, and it includes the visible light and the infrared area longer in wavelength than the visible light. Thus, the transmitted light control of the device according to the present invention can cover a wide wavelength range.

It should be understood that the foregoing relates to only preferred embodiments of the present invention, and that it is intended to cover all changes and modifications of the embodiments of the present invention herein used for the purpose of the disclosure, which do not constitute departures from the concept and scope of the present invention.

## Claims

1. A display device characterized by comprising:
   a housing (26) having two surfaces (20) disposed in opposed relation to each other, at least a portion of each of which is transparent, and which are disposed in opposed relation to each other;
   first elongated transparent electrodes (22) formed on one of said opposed surfaces (20) of said housing (26) to be arranged successively along a direction;
   second elongated transparent electrodes (23) formed on the other surface (20) of said housing (26) to be arranged successively along a direction perpendicular to the arranged direction of said first elongated transparent electrodes (22) so that said first and second elongated transparent electrodes (22, 23) form a matrix-like configuration; and
   an electro-sensitive type photofunctional fluid composition (21) produced by dispersing electric alignment particles (30) in an electrical insulating medium (29) and packed within said housing (26).

2. A display device as set forth in claim 1, characterized by further comprising electric field applying means (123, 124) whereby an electric field is successively applied to between said first and second transparent electrodes (22, 23) at given time intervals so that said electric alignment particles (30) are partially aligned in response to the applied electric field.

3. A display device as set forth in claim 1 or 2, characterized in that said electric alignment particles (30) are inorganic and organic composite particles each of which is composed of a core body (31) made of a polymer compound and a surface layer (33) including an inorganic matter (32) demonstrating an electric alignment effect.

4. A display device as set forth in claim 3, characterized in that at least one of said core body (31), said surface layer (33) and said electrical insulating medium (29) includes a dyestuff (32').

5. A display method of displaying a graphic pattern on a display device, characterized in that, in said display device comprising a housing (26) having two surfaces (20), at least a portion of each of which is transparent, and which are disposed in opposed relation to each other, sets of first and second transparent electrodes (22, 23) formed on said opposed surfaces (20) of said housing (26), respectively, to be disposed in opposed relation to each other, and an electro-sensitive type photofunctional fluid composition (21) produced by dispersing electric alignment particles (30) in an electrical insulating medium (29) and packed within said housing (26), said method comprises the step of successively applying a voltage to the sets of said first and second transparent electrodes (22, 23) at time intervals so that an electric field is successively applied to between said first and second transparent electrodes (22, 23), said electric alignment particles (30) being partially aligned in response to the applied electric field to allow a quantity of transmitted light passing through said housing (26) to be controlled.

6. A display device characterized by comprising:
a housing (118) having two surfaces (115), at least a portion of each of which is transparent, and which are disposed in opposed relation to each other;
transparent conductive layers (117) formed on the transparent portions of the opposed surfaces (115), respectively, each of said transparent conductive layers (117) being divided into a plurality of sections to form a graduation; and
an electro-sensitive type photofunctional fluid composition (21) produced by dispersing electric alignment particles (30) in an electrical insulating medium (29) and packed within said housing (118).

7. A display device as set forth in claim 6, characterized in that said transparent conductive layer (117) is divided into two strip-like vertical sections (117a, 117c) and three strip-like horizontal sections (117b, 117d) on a two-dimensional plane, said three horizontal sections (117b, 117d) being disposed to extend between said two vertical sections (117a, 117c) in directions substantially perpendicular to longitudinal directions of said two vertical sections (117a, 117c).

8. A display device as set forth in claim 6, characterized in that the divided sections are arranged successively to entirely form a substantial circular configuration.

9. A display device as set forth in any one of claims 6 to 8, characterized in that said electric alignment particles (30) are inorganic and organic composite particles each of which is composed of a core body (31) made of a polymer compound and a surface layer (33) including an inorganic matter (32) demonstrating an electric alignment effect.

10. A display device characterized by comprising a plurality of housings (118, 118') arranged successively to form a graduation, said each of said plurality of housings (118, 118') including:
two surfaces (115), at least a portion of each of which is transparent, and which are disposed in opposed relation to each other;
transparent conductive layers (117) formed on the transparent portions of the opposed surfaces (115), respectively; and
an electro-sensitive type photofunctional fluid composition (21) produced by dispersing electric alignment particles (30) in an electrical insulating medium (29) and packed within said housing (118).

**FIG. 1A**

**FIG. 1B**

# FIG. 2

**FIG. 3**

FIG. 4

**FIG. 5**

## FIG. 6

FIG. 7

FIG. 8

FIG. 9

FIG. 10

**FIG. 11**

**FIG. 12**

**FIG. 13**

**FIG. 14A**

**FIG. 14B**

**FIG. 15**

**FIG. 16**

FIG. 17A

FIG. 17B

**FIG. 18**

**FIG. 19**

FIG. 20

**FIG. 21**

FIG. 22

FIG. 23

**FIG. 24**

10cSt OIL 7wt% INORGANIC
AND ORGANIC PARTICLES

TRANSMITTED LIGHT QUANTITY(dB)

4dB

TIME (sec)

**FIG. 25**

TRANSMITTED LIGHT QUANTITY (dB)

E=2kv

E=0kv

WAVE LENGTH (nm)

**FIG. 26**

**FIG. 27**

**FIG. 28**

# FIG. 29

# FIG. 30